# EUROPÄISCHE PATENTSCHRIFT

(11) **EP 1 897 721 B1**
(45) Veröffentlichungstag und Bekanntmachung des Hinweises auf die Patenterteilung: **11.03.2009**
(21) Anmeldenummer: 07015437.2
(22) Anmeldetag: 07.08.2007
(51) Int. Cl.: B60J 7/12

(54) **Verdeck für ein Cabriolet**
Soft top for a convertible
Capote pour un cabriolet

(30) Priorität: 08.09.2006 DE 102006042198
(43) Veröffentlichungstag der Anmeldung: 12.03.2008
(73) Patentinhaber: Dr. Ing. h.c. F. Porsche Aktiengesellschaft, 70435 Stuttgart (DE)
(72) Erfinder: Fröschle, Mathias, 73760 Ostfildern (DE); Liebhardt, Randolf, 71120 Grafenau (DE)

(56) Entgegenhaltungen:
- EP-A- 0 921 023
- WO-A-20/04058529
- DE-U1- 29 923 087

## Beschreibung

Bei der Erfindung wird ausgegangen von einem Verdeck für ein Cabriolet, gemäß Oberbegriff des Patentanspruchs 1.

Die DE 199 62 995 A1 beschreibt ein gattungsbildendes Verdeck für ein Cabriolet. Es umfasst ein Verdeckgestell, das einen Verdeckbezug trägt und das ein mit einem Verdecklager verbindbares Hauptgestänge sowie jeweils einen seitlichen Dachrahmen mit einem vorderen Dachrahmenabschnitt aufweist. Zumindest ein weiterer Dachrahmenabschnitt jedes Dachrahmens ist zweiteilig ausgeführt und weist ein inneres Gestellteil und einen seitlich außen an dem inneren Gestellteil angelenkten Profilabschnitt auf. Der bewegliche Profilabschnitt ist über eine etwa in Fahrzeughochrichtung verlaufende Schwenkachse an dem inneren Gestellteil angebunden. Über eine Lenkerstange ist der Profilabschnitt mit dem Hauptgestänge verbunden, so dass bei einer Ablagebewegung des Verdecks der Profilabschnitt um seine hintere Schwenkachse nach außen geschwenkt wird. Bei der umgekehrten Bewegungsrichtung des Verdecks bewegt die Lenkerstange den Profilabschnitt wieder in Richtung des inneren Gestellteils.

Aufgabe der Erfindung ist es, einen vereinfachten Aufbau für das Verdeck der eingangs genannten Art anzugeben.

Gelöst wird diese Aufgabe mit einem Verdeck, das die in Anspruch 1 genannten Merkmale aufweist. Ausführungsbeispiele sind Gegenstand der Unteransprüche.

Die-mit der Erfindung hauptsächlich erzielten Vorteile sind darin zu sehen, dass der gespannte Verdeckbezug, der mit seinem Randstreifen den Profilabschnitt überdeckt, den Profilabschnitt in seiner Einschwenkposition hält.

Nach einem bevorzugten Ausführungsbeispiel entsprechend Anspruch 2, kann der sich spannende Verdeckbezug den Profilabschnitt wieder in seine Einschwenkposition überführen. Alternativ (Anspruch 3) kann für das Einschwenken des Profilabschnitts ein flexibler Zug, wie Bowdenzug, vorgesehen sein.

Besonders günstig ist es, wenn das Ausschwenken des Profilabschnitts durch eine sich bei der Einschwenkbewegung spannende Federeinrichtung bewirkt wird. Als Alternative hierzu kann an dem Verdeckgestell eine Schräge vorgesehen sein, die bei einer Öffnungsbewegung des Verdecks den Profilabschnitt in seine Ausschwenkposition drängt.

Besonders bevorzugt wird nach Anspruch 6 ein Ausführungsbeispiel, nach dem der Randstreifen des Verdecks zumindest abschnittweise mit einem Spannseil ausgestattet ist. Dieses Seil kann die Einschwenkbewegung unterstützten bzw. das Halten des Profilabschnitts in der Einschwenkposition verbessern.

Die Erfindung wird nachfolgend anhand von Ausführungsbeispielen mit Bezug auf die Zeichnung näher erläutert. Es zeigen:
- Fig. 1: ausschnittweise in Seitenansicht ein Verdeck in einer Teilöffnungsstellung und
- Fig. 2: eine vergrößerte Detaildarstellung eines Dachrahmens des Verdecks in einer Perspektive.

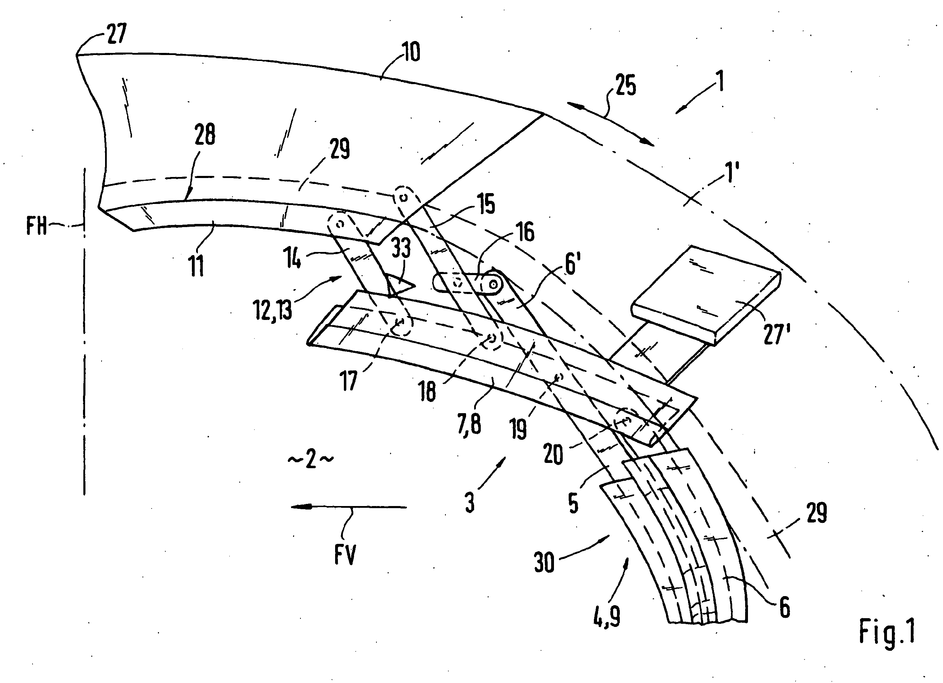

In Fig. 1 ist der grundsätzliche Aufbau eines Verdecks 1 für ein nicht dargestelltes Cabriolet gezeigt. Das Verdeck 1 ist an einem nicht gezeigten Verdecklager beweglich derart angelenkt, dass es aus einer nicht gezeigten Schließstellung, in der es einen Fahrgastraum 2 überspannt, in eine heckseitige, ebenfalls nicht gezeigte Ablagestellung bewegt werden kann. Das Verdeck 1 mit einem strichpunktiert eingezeichneten Verdeckbezug 1' besitzt ein Verdeckgestell 3 mit mehreren Gestellteilen, von denen ein Hauptgestänge 4 mit dem Verdecklager verbunden ist. Das Hauptgestänge 4 weist zumindest zwei Lenker, hier einen so genannten Dachlenker 5 und einen Hauptlenker 6, auf, die zusammen mit einem seitlichen Dachrahmenabschnitt 7 eines seitlichen Dachrahmens 8 ein Hauptviergelenk 9 bilden. An den Dachrahmenabschnitt 7 schließt sich ein vorderes bzw. erstes Dachteil 10 mit einem vorderen Dachrahmenabschnitt 11 des Verdecks 1 an, welches über eine Verbindungslenkeranordnung 12 mit dem dahinter liegenden, also zweiten Dachrahmenabschnitt 8 verbunden ist. Die Verbindungslenkeranordnung 12 bildet vorzugsweise ein zweites Viergelenk 13 des Verdeckgestells 3 und umfasst einen vorderen und hinteren Steuerlenker 14 und 15, die jeweils schwenkbeweglich mit dem vorderen Dachteil 10 und dem zweiten Dachrahmenabschnitt 7 verbunden sind. In die Kinematik des Verdeckgestells 3 eingekoppelt ist das vordere Dachteil 10 über einen Koppellenker 16, der das Hauptgestänge 4 und die Verbindungslenkeranordnung 12 miteinander koppelt. Am zweiten Dachrahmenabschnitt 7 befinden sich demnach vier Schwenklager 17, 18, 19 und 20 des Verdeckgestells 3, so dass dort eine hohe Anzahl sich gegeneinander bewegender Gestellteile angebunden ist.

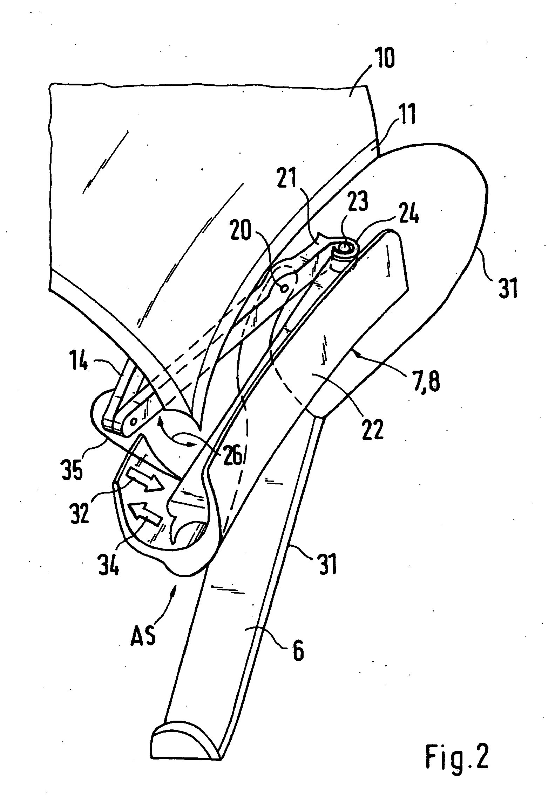

Der zweite Dachrahmenabschnitt 7 ist, wie Fig. 2 zeigt, zweiteilig mit einem inneren Gestellteil 21 und einem äußeren Profilabschnitt 22 (Dichtungsstrang) ausgeführt. An dem inneren Gestellteil 21 liegen die vier Schwenkachsen 17 bis 20, was allerdings in Fig. 2 nicht dargestellt ist. Der Profilabschnitt 22 ist an dem Gestellteil 21 schwenkbeweglich angelenkt, wofür eine etwa in Fahrzeughochrichtung FH (Fig. 1) verlaufende Schwenkachse 23 vorgesehen ist, die - bezüglich einer Vorwärtsfahrtrichtung FV - am hinteren Ende 24 des Gestellteils 21 angebracht ist. Damit ist der Profilabschnitt 22 schwenkbeweglich nach außen von dem Gestellteil 21 weg verlagerbar , wenn das Verdeck 1 von seiner Schließstellung in die Ablagestellung bewegt wird, und wird wieder in Richtung des Gestellteils 21 verschwenkt, wenn das Verdeck 1 von der Ablagestellung in Schließstellung bewegt wird. Die Bewegung des Profilabschnitts 22 während der Verdeckbewegung (Doppelpfeil 25) um die Schwenkachse 23 ist durch einen weiteren Doppelpfeil 26 angedeutet.

Die Bewegungsübertragung zwischen Hauptgestänge 4 und Verbindungslenkeranordnung 12 erfolgt über den in das Verdeckgestell 3 eingebundenen Koppellenker 16, der das Hauptgestänge 4 mit der Verbindungslenkeranordnung 12 koppelt. Im gezeigten Ausführungsbeispiel ist ein Lenker 5 oder 6, hier der Dachlenker 6, mit einem Fortsatz 6' ausgestattet, der den zweiten Dachrahmenabschnitt 7 überragt und der an seinem Ende mit dem Koppellenker 16 verbunden ist, wobei letzterer auch mit einem der Steuerlenker 14 oder 15 verbunden ist.

Der Verdeckbezug 1' erstreckt sich von einer Dachspitze 27 über das vordere Dachteil 10 über einen Spriegel 27' bis zu einem nicht gezeigten, heckseitigen, aus dem Stand der Technik bekannten Stoffspannbügel, an dem der Verdeckbezug 1' befestigt ist. In Schließstellung des Verdecks 1 ist der Verdeckbezug 1' somit in an sich bekannter Weise gespannt gehalten und er wird bei einer Öffnungsbewegung des Verdecks 1 ebenfalls in an sich bekannter Weise entspannt, so dass das Verdeck 1 in den Ablagekasten hinein abgelegt werden kann. Der Verdeckbezug 1' weist in seinem seitlichen Randbereich 28 einen Randstreifen 29, der bei geschlossenem Verdeck 1 den seitlichen Dachrahmen 8 zumindest teilweise abdeckt, wobei der seitliche Dachrahmen 8 im gezeigten Ausführungsbeispiel noch einen dritten Dachrahmenabschnitt 30 aufweist, der in Schließstellung des Verdecks 1 von zumindest einem der Lenker 5 und/oder 6 gebildet bzw. getragen wird und der sich an den zweiten bzw. mittleren Dachrahmenabschnitt 8 anschließt. In den Randstreifen 29 ist ein Spannseil 31 (Fig. 2) eingelegt, das sich zumindest von dem vorderen Dachrahmenabschnitt 11 bis zum hinteren bzw. dritten Dachrahmenabschnitt 30 erstreckt und dort jeweils festgelegt ist.

Wird das Verdeck 1 aus seiner Schließstellung in die Ablagestellung bewegt, entspannt sich der Verdeckbezug 1', wodurch nach einem ersten Ausführungsbeispiel der Profilabschnitt 22 von dem Randstreifen 29 des Verdeckbezugs 1' freigegeben und durch die Kraft 32 einer nicht gezeigten Federeinrichtung um seine Schwenkachse 23 nach außen, also von dem inneren Gestellteil 21 weggeschwenkt wird, so dass er seine Ausschwenkposition AS einnehmen kann. Wird das Verdeck 1 aus der Ablagestellung in die Schließstellung bewegt, drückt der sich dabei spannende Verdeckbezug 1' mit seinem Randstreifen 29 - ggf. mit Unterstützung durch das Spannseil 31 - auf den Profilabschnitt 22 und drängt diesen bis in seine Einschwenkposition (nicht gezeigt) nahe an dem Gestellteil 21 und hält den Profilabschnitt 22 dort fest.

Nach einem zweiten Ausführungsbeispiel wird anstelle der Kraft 32 der Federeinrichtung an dem Verdeckgestell 3 eine Schräge 33 ausgebildet, die für den Profilabschnitt 22 eine Steuerbahn bildet, um diesen beim Bewegen des Verdecks 1 von der Schließstellung in die Ablagestellung nach außen in seine Ausschwenkposition AS zu drängen, wenn der Randstreifen 29 den Profilabschnitt 22 freigegeben hat. Vorzugsweise ist die Steuerschräge 33 am vorderen Dachteil 10 und insbesondere an der Verbindungslenkeranordnung 12, besonders bevorzugt an einem der Steuerlenker 14 oder 15 angeordnet, wie Fig. 2 zeigt. Das Einschwenken des Profilabschnitts 22 beim Schließen des Verdecks 1 erfolgt wie im Zusammenhang mit dem ersten Ausführungsbeispiel beschrieben. Zusätzlich oder alternativ kann das Einschwenken des Profilabschnitts 22 durch eine Kraft 34 einer Federeinrichtung (nicht gezeigt) zumindest unterstützt werden.

Gemäß einem dritten Ausführungsbeispiel drückt die Kraft 32 den Profilabschnitt 22 in Ausschwenkposition AS, wenn der Randstreifen 29 den Profilabschnitt 22 freigegeben hat, und ein flexibler Zug 35, wie Bowdenzug, zieht den Profilabschnitt 22 bei der Schließbewegung des Verdecks 1 wieder in Richtung des Gestellteils 21. Der flexible Zug 35 ist an dem Profilabschnitt 22 und einem Gestellteil des Verdeckgestänges 3 oder an dem vorderen Dachteil 10 befestigt, vorzugsweise an der Verbindungslenkeranordnung 12 oder an dem Hauptgestänge 4.

## Patentansprüche

1. Verdeck (1) für ein Cabriolet, mit einem Verdeckgestell (3), das zumindest ein Hauptgestänge (4) sowie jeweils einen seitlichen Dachrahmen (8) aufweist, der einen vorderen, ersten Dachrahmenabschnitt (11) und einen zweiten Dachrahmenabschnitt (7) aufweist, der zumindest abschnittweise als ein zweiteiliger Dachrahmenabschnitt (7) mit einem inneren Gestellteil (21) und mit einem seitlich außen an dem inneren Gestellteil schwenkbar angelenkten Profilabschnitt (22) ausgeführt ist, und mit einem von dem Verdeckgestell getragenen Verdeckbezug (1'), **dadurch gekennzeichnet, dass** der gespannte Verdeckbezug (1') in Schließstellung des Verdecks (1) zumindest den Profilabschnitt (22) zumindest abschnittweise mit einem Randstreifen (29) überdeckt und bei einer Öffnungsbewegung des Verdecks (1) den Profilabschnitt (22) für eine Schwenkbewegung (Pfeil 26) in Ausschwenkposition (AS) freigibt.

2. Verdeck nach Anspruch 1, **dadurch gekennzeichnet, dass** der sich spannende Verdeckbezug (1') bei einer Schließbewegung des Verdecks (1) eine Einschwenkbewegung (Pfeil 26) des Profilabschnitts (22) in Richtung des inneren Gestellteils (21) zumindest unterstützt.

3. Verdeck nach Anspruch 1, **dadurch gekennzeichnet, dass** bei einer Schließbewegung des Verdecks (1) ein zwischen Profilabschnitt (22) und Verdeckgestell (3) befestigter flexibler Zug (35) den Profilabschnitt (22) in eine Einschwenkbewegung (Pfeil 26) überführt.

4. Verdeck nach einem der vorhergehenden Ansprüche, **dadurch gekennzeichnet, dass** die Ausschwenkbewegung (Pfeil 26) des Profilabschnitts (22) mit einer Federeinrichtung (Kraft 32) unterstützt ist.

5. Verdeck nach einem der vorhergehenden Ansprüche, **dadurch gekennzeichnet, dass** eine am Verdeckgestell (3) angeordnete Schräge (33) die Ausschwenkbewegung (Pfeil 26) des Profilabschnitts (22) bewirkt.

6. Verdeck nach Anspruch 1, **dadurch gekennzeichnet, dass** der Verdeckbezug (1') in seinem dem Profilabschnitt (22) überdeckenden Randstreifen (29) mit einem Spannseil (31) ausgestattet ist.

## Claims

1. Soft top (1) for a convertible, with a soft-top framework (3) which has at least one main linkage (4) and in each case a lateral roof frame (8) which has a front, first roof frame section (11) and a second roof frame section (7) which is designed at least in some sections as a two-part roof frame section (7) with an inner framework part (21) and with a profile section (22) which is coupled pivotably laterally on the outside of the inner framework part, and with a soft-top cover (1') which is supported by the soft-top framework, **characterized in that**, in the closed position of the soft top (1), the tensioned soft-top cover (1') covers at least the profile section (22) at least in some sections with an edge strip (29) and, during an opening movement of the soft top (1), releases the profile section (22) for a pivoting movement (arrow 26) into a pivoted-out position (AS).

2. Soft top according to Claim 1, **characterized in that**, during a closing movement of the soft top (1), the soft-top cover (1') which is being tensioned at least assists a pivoting-in movement (arrow 26) of the profile section (22) in the direction of the inner framework part (21).

3. Soft top according to Claim 1, **characterized in that**, during a closing movement of the soft top (1), a flexible pull (35) which is fastened between the profile section (22) and soft-top framework (3) transfers the profile section (22) into a pivoting-in movement (arrow 26).

4. Soft top according to one of the preceding claims, **characterized in that** the pivoting-out movement (arrow 26) of the profile section (22) is assisted by a spring device (force 32).

5. Soft top according to one of the preceding claims, **characterized in that** a bevel (33) arranged on the soft-top framework (3) brings about the pivoting-out movement (arrow 26) of the profile section (22).

6. Soft top according to Claim 1, **characterized in that** the soft-top cover (1') is provided with a tensioning cable (31) in its edge strip (29) which covers the profile section (22).

## Revendications

1. Capote (1) pour un cabriolet, comprenant un bâti de capote (3) qui présente au moins une tringlerie principale (4) ainsi qu'un cadre de toit latéral (8) respectif, qui présente une première portion de cadre de toit avant (11) et une deuxième portion de cadre de toit (7), qui est réalisée au moins en partie sous forme de portion de cadre de toit (7) en deux parties avec une partie de bâti intérieure (21) et avec une portion profilée (22) articulée de manière pivotante latéralement à l'extérieur à la partie de bâti intérieure, et avec un revêtement de capote (1') porté par le bâti de capote, **caractérisée en ce que** le revêtement de capote tendu (1') recouvre dans la position de fermeture de la capote (1) au moins la portion profilée (22) au moins en partie avec une bande de bord (29), et dans le cas d'un mouvement d'ouverture de la capote (1), libère la portion profilée (22) pour un mouvement pivotant (flèche 26) dans la position ouverte par pivotement (AS).

2. Capote selon la revendication 1, **caractérisée en ce que** le revêtement de capote (1') tendu supporte au moins, dans le cas d'un mouvement de fermeture de la capote (1), un mouvement de pivotement vers l'intérieur (flèche 26) de la portion profilée (22) dans la direction de la partie de bâti intérieure (21).

3. Capote selon la revendication 1, **caractérisée en ce que** dans le cas d'un mouvement de fermeture de la capote (1), un câble flexible (35) fixé entre la portion profilée (22) et le bâti de la capote (3) déplace la portion profilée (22) dans un mouvement de pivotement vers l'intérieur (flèche 26).

4. Capote selon l'une quelconque des revendications précédentes, **caractérisée en ce que** le mouvement de pivotement vers l'extérieur (flèche 26) de la portion profilée (22) est supporté par un dispositif à ressort (force 32).

5. Capote selon l'une quelconque des revendications précédentes, **caractérisée en ce qu'**un biseau (33) disposé sur le bâti de la capote (3) provoque le mouvement de pivotement vers l'extérieur (flèche 26) de la portion profilée (22).

6. Capote selon la revendication 1, **caractérisée en ce que** le revêtement de capote (1') est muni d'un câble de serrage (31) dans sa bande de bord (29) recouvrant la portion profilée (22).
